Europäisches Patentamt

European Patent Office

Office européen des brevets

(11) Publication number: **0 465 667 A1**

# EUROPEAN PATENT APPLICATION
## published in accordance with Art. 158(3) EPC

(21) Application number: 91902781.3

(22) Date of filing: 28.01.91

(86) International application number:
**PCT/JP91/00088**

(87) International publication number:
**WO 91/11563 (08.08.91 91/18)**

(51) Int. Cl.5: **E02D 17/08, E21D 9/06**

(30) Priority: **29.01.90 JP 16204/90**

(43) Date of publication of application:
**15.01.92 Bulletin 92/03**

(84) Designated Contracting States:
**AT BE CH DE ES FR GB IT LI LU NL SE**

(71) Applicant: **KABUSHIKI KAISHA ISEKI KAIHATSU KOKI 31-6, Yoyogi 4-chome**

**Shibuya-ku, Tokyo 151(JP)**

(72) Inventor: **AKESAKA, Toshio, 17-40, Azamino 1-chome Midori-ku, Ykohama-shi Kanagawa 22(JP)**

(74) Representative: **Low, Peter John et al WILSON, GUNN & ELLIS 41 Royal Exchange Manchester, M2 7BD(GB)**

(54) **METHOD OF AND APPARATUS FOR LAYING PIPES.**

(57) First and second assemblies (18 and 30) respectively having each of a pair of plate-shaped retaining means (24 and 26) are alternately moved forwardly by a driving means (22). During this movement, ground (14) is dug to form a groove (16). A reaction force acting on the first assembly (24) during the forward movement of the second assembly (36) and a reaction force acting on the second assembly during the forward movement of the first assembly are respectively applied to the ground defining the groove through first and second position maintaining means (32 and 52). When the first and second assemblies are moved forwardly over a predetermined distance, a new pipe (12) is placed in the groove and connected to a pipe (12) which has been previously laid.

FIG. 2

# TECHNICAL FIELD

This invention relates to a method and an apparatus for laying a pipe for a pipeline such as a sewer pipeline under the ground, and more particularly, to a method and an apparatus for laying pipes such as a box culvert by a open cut method.

# BACKGROUND ART

As one of pipe laying apparatuses used as an earth-retaining or sheathing apparatus for open cut works, there is an apparatus in which an approximately box-type frame in the whole form is used. This known laying apparatus comprises a pair of side plates facing mutually and placed horizontally at an interval, a supporting frame attached to the side plates, and a plurality of jacks for advancing the supporting frame. In this laying apparatus, an earth pressure is received by the side plates, and a reaction force is received by a pipe which has been already placed within a channel (it will be designated as a "pipe already installed" thereafter in the present invention).

The above-mentioned known laying apparatus known is advanced in the channel formed in the ground, while the channel is formed in the ground by a machine known per se such as a back hoe so as to extend the channel. After the channel is extended by a required length, a new pipe is placed within the channel and connected to the pipe already installed. Then, an excavation and advance operation for excavating the ground while advancing the laying apparatus and a placement and connection operation for placing a new pipe in the channel and connecting the new pipe to the pipe already installed are performed alternately.

The above-mentioned known laying apparatus and the method for laying a pipe by the apparatus, however, are based on loading the reaction force in advancing of the apparatus on the pipe already installed, and therefore, the excavation and advance operation are not performed simultaneously with the placement and connection operation of the new pipe. A buffer material for preventing the breakage of the end surfaces of the pipe already installed should be placed between the pipe already installed and the jack. Further, a large-sized jack having a stroke larger than the length of the pipe to be installed should be used.

# DISCLOSURE OF THE INVENTION

An object of the present invention is to provide a method and an apparatus for laying a pipe, in which the excavation of the ground and the advance operation of the apparatus are performed simultaneously with the placement and connection operation of a new pipe.

A method for laying a pipe according to the present invention comprises the steps of alternately performing first process for causing a first frame assembly disposed in a channel formed in the ground to advance in relation to a second frame assembly disposed within the channel and at the rear of the first frame assembly, while loading a reaction force acting on the second frame assembly on the ground, and second process for causing the second frame assembly to advance toward the first frame assembly, while loading a reaction force acting on the first frame assembly on the ground, the first frame assembly being provided with a pair of first plate-like earth-retaining means placed so as to face mutually in the horizontal direction at an interval, and the second frame assembly being provided with a pair of second plate-like earth-retaining means placed so as to face mutually in the horizontal direction at an interval, excavating earth and sand in front of the first frame assembly to extend the channel while alternately performing the processes, and disposing a pipe in an excavating place.

An apparatus for laying a pipe according to the present invention comprises a first frame assembly provided with a pair of first plate-like earth-retaining means placed so as to face mutually in the horizontal direction at an interval and first connecting means for interconnecting both first earth-retaining means, a second frame assembly placed at the rear of the first frame assembly and provided with a pair of plate-like second earth-retaining means placed so as to face mutually in the horizontal direction at an interval and second connecting means for interconnecting both second earth-rotating means, drive means for moving relatively the first and second frame assemblies in the front and rear directions, first position maintaining means for preventing unlockably the first frame assembly from moving in the front and rear directions to the ground by causing the reaction force acting on the first frame assembly to work on the ground, and second position maintaining means for preventing unlockably the second frame assembly from moving in the front and rear directions to the ground by causing the reaction force acting on the second frame assembly to work on the ground.

In laying, the ground is excavated while the first and second frame assemblies advance alternately, and therefore, the channel is extended. The reaction force acting on the second frame assembly in advancing of the first frame assembly and the reaction force acting on the first frame assembly in advancing of the second frame assembly are transmitted to the ground defining the channel.

When the first and second frame assemblies advance by the required distances, a new pipe is placed in the channel and connected to a pipe already installed. While the new pipe is placed and connected to the pipe already installed, the subsequent excavation and connection operations for excavating the ground and for advancing the laying apparatus are continued.

According to the present invention, since the reaction force acting on the first and second frame assemblies is transmitted to the ground, it is not needed to load the reaction force in advancing of the apparatus on the pipe already installed, and in addition, it is possible to advance the first and second frame assemblies alternately. As a result, the excavation and advance operations are done simultaneously with the placement and connection operation of the pipe, and a jack with a small stroke can be used as drive means for propulsion.

While the first frame assembly is advanced, the reaction force can be allowed to transmit to the ground by pressing at least a portion of the second frame assembly against a portion defining the channel. While the second frame assembly is moved, the reaction force can be allowed to transmit to the ground by pressing at least a portion of the first frame assembly against a portion defining the channel.

Both second earth-retaining means may be connected to the second connecting means so as to be pivotable around an axis extending in the vertical direction.

The second position maintaining means can be provided with a jack for displacing both second earth-retaining means in such a direction that either of the front and rear end portions of both second earth-retaining means become apart from each other. In this manner, the reaction force acting on the second frame assembly is transmitted to the earth and sand contacting with both second earth-retaining means by pressing either of the front end portion or the rear end portion of both second earth-retaining means against the ground, and therefore, the second earth-retaining means acts as a member for transmitting the reaction force acting on the second frame assembly to the ground. As a result, the structure of the second position maintaining means is simplified.

The second frame assembly can be provided with a cylindrical member arranged so as to extend from one of the second earth-retaining means to the other and a slider provided every said second earth-retaining means, installed to be capable of going in and out of the end portion of the cylindrical member and connected to the corresponding second earth-retaining means. In this case, it is preferable that the jack is disposed within the cylindrical member so as to displace the slider against the cylindrical member. By this, the structure of the second frame assembly is simplified.

It is preferable that the both second earth-retaining means are connected to the second connecting means so as to be pivotable around an axis extending in the vertical direction and that both first earth-retaining means are connected to the first connecting means so as to be relatively indisplaceable. In this way, both first earth-retaining means are not displaced relatively in the front and rear directions. On the contrary, both second earth-retaining means are displaced relatively in the front and rear directions. Therefore, the laying apparatus is advanced along a curved path by advancing the first and second frame assemblies alternately under the condition that both second earth-retaining means are displaced in the front and rear directions.

The first position maintaining means can be provided with a plurality of plate-like reaction force transmitting members provided every said first earth-retaining means and disposed within a hole formed in the corresponding first earth-retaining means, and the drive means can also be provided with a plurality of jacks installed corresponding to the reaction force transmitting members. In this case, it is preferable that each of the reaction force transmitting members is supported by the first earth-retaining means so as to be pivotable around the axis extending in the vertical directions, one of a cylinder and a piston rod of each jack is connected to the portion in front of the axis of the corresponding reaction force transmitting member, and further the other of the cylinder and the piston rod is connected to the second earth-retaining means. In this way, the drive means for advancing the apparatus also works as drive means for the reaction force transmitting member, so that the structure of the apparatus is simplified.

It is preferable that a recess opening inward and backward is formed in each of the first earth-retaining means and the second frame assembly is provided with a plate-like slider accepted in the recess slidably in the front and rear directions. In this way, when the first and second frame assemblies are advanced alternately, a space portion defined in the connection position of both frame assemblies is closed by the slider such that a part of earth pressure is received by the plate-like slider.

BRIEF DESCRIPTION OF THE DRAWINGS

Fig. 1 is a plan view showing an apparatus for laying a pipe as a preferred embodiment of the present invention;
Fig. 2 is a sectional view taken along a line 2-2 of Fig. 1;
Fig. 3 is a front view showing the laying apparatus shown in Fig. 1; and

Figs. 4(A), 4(B), 4(C) and 4(D) are views for respectively explaining the operation of the laying apparatus.

## BEST MODE FOR EXECUTING THE INVENTION

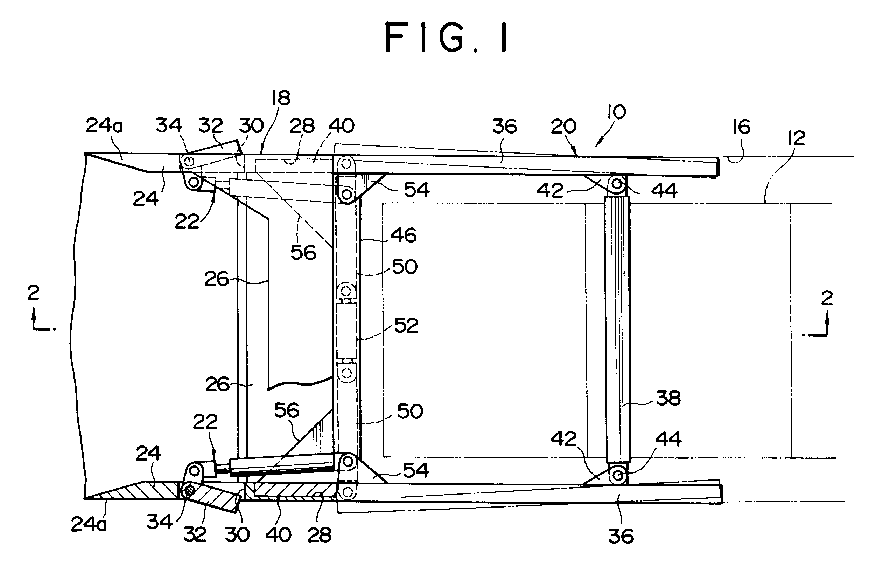

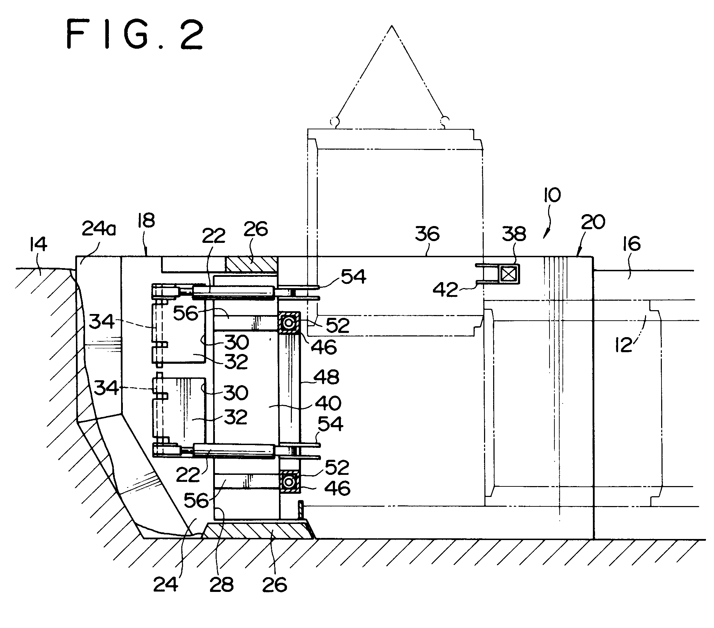

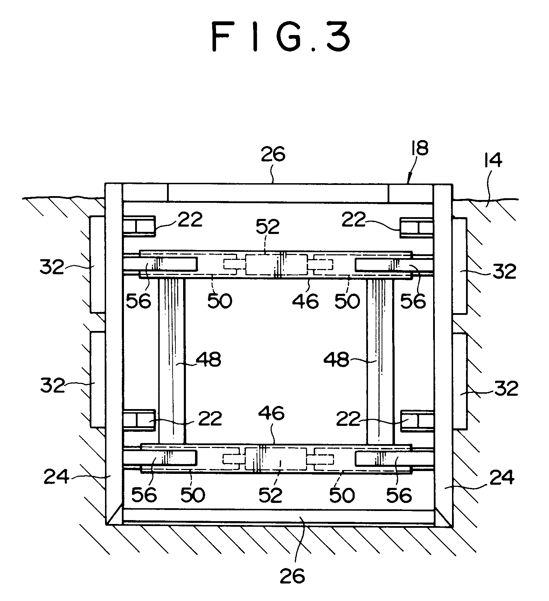

An apparatus 10 for setting a pipe shown in Figs. 1, 2 and 3 is used as an apparatus for constructing a pipeline by placing pipes 12 such as a box culvert within a channel 16 excavated in the ground 14. The laying apparatus 10 comprises a first frame assembly 18, a second frame assembly 20 placed in the rear of the first frame assembly, and a plurality of propulsion jacks 22, i.e., drive means for moving the first and second frame assemblies 18, 20 relatively in the front and rear directions.

The first frame assembly 18 is provided with a pair of first side plates 24, i.e., plate-like first earth-retaining means placed so as to face mutually in the horizontal direction at an interval and a pair of first connecting members 26, i.e., first connecting means for interconnecting both first side plates so as to be relatively indisplaceable. In an illustrated embodiment, each first side plate 24 has a cutting edge 24a at the front end, and each connecting member 26 is composed of a plate-like member welded to the upper or lower ends of both side plates.

Each first side plate 24 has a recess 28 formed at the rear end of the first side plate 24 so as to open inward and backward, and two approximately rectangular holes 30 formed in the center of the first side plate 24 upward and downward at an interval. A reaction force transmitting member 32 has an approximately rectangular plate-like forme and is placed in each of the holes 30.

Each reaction force transmitting member 32 is installed to the first side plate 24 so as to be angularly rotatable around an axis extending in the vertical direction, by means of a shaft 34. Each reaction force transmitting member 32 is connected to the piston rod of the jack 22 for propulsion at the front and such that it closes the corresponding hole 30 when the first frame assembly 18 is advanced and that the rear end is projected from the corresponding first side plate 24 to the outside when the second frame assembly 20 is advanced. Therefore, both reaction force transmitting members 32 act as first position maintaining means for preventing the first frame assembly 18 from moving in the front and rear directions when the second frame assembly 20 is advanced. Each reaction force transmitting member 32 may be driven by other jack instead of using the jack 22 for propulsion.

The second frame assembly 20 is provided with a pair of second side plates 36, i.e., a pair of plate-like second earth-retaining means placed so as to face mutually in the horizontal direction at an interval, a second connecting member 38, i.e., second connecting means for interconnecting both second side plates and a slider 40 received in the recess 28 of each first side plate so as to be movable in the front and rear directions. Each second side plate 36 is connected to the second connecting member 38 so as to be angularly rotatable around the axis extending in the vertical direction, by means of a bracket 42 and a shaft 44.

In the front end of the second frame assembly 20 is placed a pair of cylindrical members 46 disposed in the vertical direction at an interval so as to extend horizontally from one side of the second side plate 36 to the other side and a pair of pillars 48 for interconnecting the cylindrical members indisplaceably.

A pair of rod-like sliders 50 and a jack 52 connected to the slider are received in each cylindrical member 46. Each slider 50 is placed so as to be capable of going in and out of the end of the corresponding cylindrical member 46 and is connected to the second side plate 36 so as to be angularly rotatable around an axis extending in the vertical direction.

Each jack 52 is composed of a two-stage hydraulic jack having two jack portions and is fixed to the cylindrical member 46. The piston rod of each jack portion is connected to the slider 50. When each jack 52 is extended, the sliders 50 are protruded from the end of the cylindrical member 46. As a result, each second side plate 36 is angularly rotated around the shaft 44.

Consequently, when the jacks 52 are extended, the second side plates 36 are pressed against the ground outside the second side plate 36, so that the sliders 50 and the jacks 52 act as second position maintaining means for maintaining the second frame assembly 20 to move in the front and rear directions unlockably.

The cylinder of each jack 22 for propulsion is connected to a bracket 54 mounted on the second side plate 36 so as to be rotatable around an axis extending in the vertical direction. The plate-like sliders 40 are fixed to the cylindrical members 46 with a rib 56.

In the illustrated embodiment, the second connecting member 38 is disposed such that the second connecting member 38 is kept apart backward from the cylindrical members 46 in excess of the length of a pipe 12 to be laid and is placed at a position higher than the pipe 12. Otherwise, the second connecting member 38, the cylindrical members 46, the pillar members 48, the sliders 50 and the jacks 52 may be placed so that the rear end of each second side plate 36 is protruded to the outside when the first frame assembly is advanced.

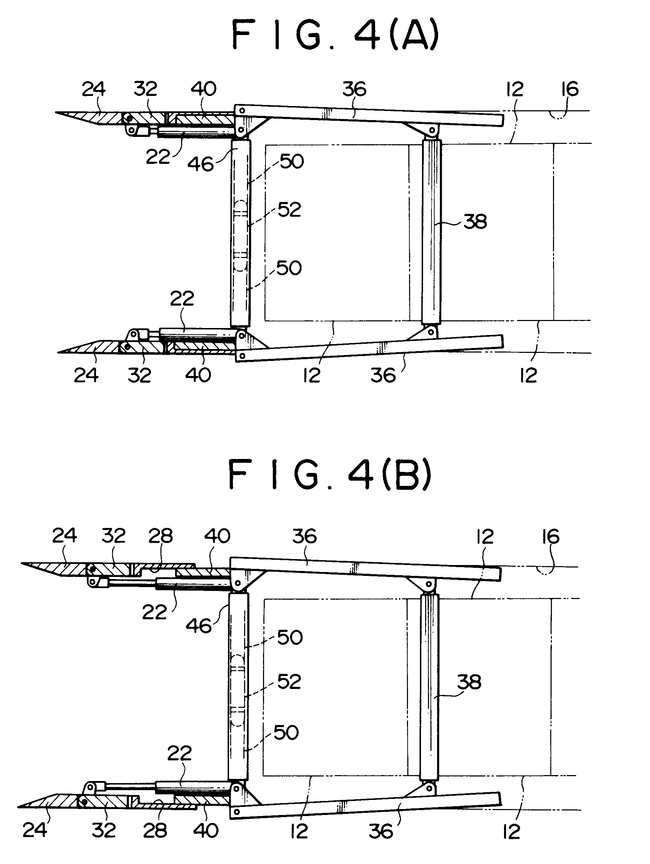

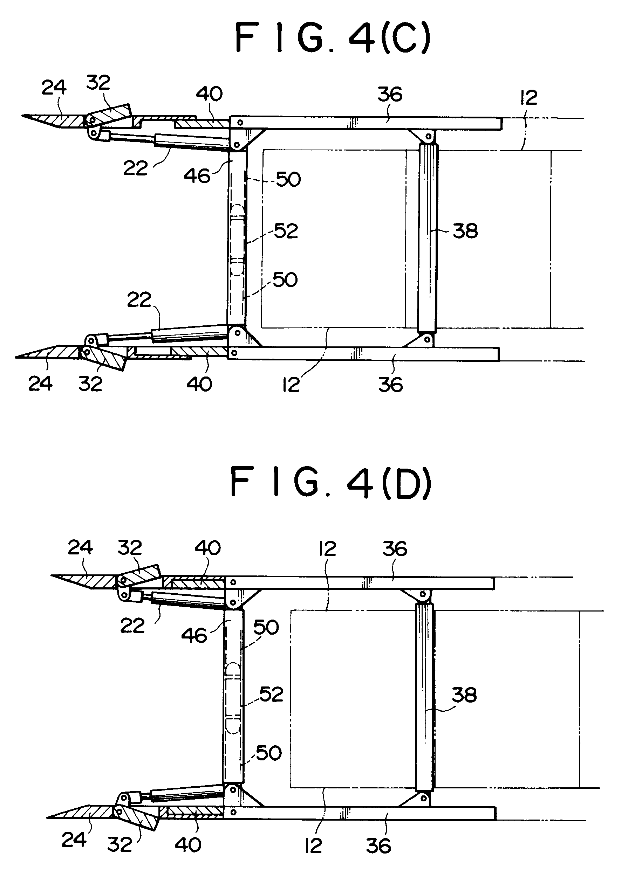

Now, with reference to Fig. 4, a method for laying the pipe 12 will be explained.

First, as shown in Fig. 4(A), each jack 52 of the second position maintaining means is extended, and the sliders 50 are pushed out from the end of the cylindrical member 46. By this procedure, the second side plates 36 are angularly rotated around the shaft 44 such that the front ends of the second side plates are made apart from each other, and pressed against the ground.

Subsequently, as shown in Fig. 4(B), each jack 22 for propulsion is extended under the condition that each jack 52 is extended. By this procedure, the thrust of the jack 22 is transmitted to the first frame assembly 18 through the reaction force transmitting member 32, and therefore, the first frame assembly 18 is advanced to the second frame assembly 20.

When the first frame assembly 18 is advanced, the reaction force transmitting members 32 are maintained at a position where the reaction force transmitting member contacts with a stopper (not illustrated) and is aligned with the first side plate 24, and therefore, each reaction force transmitting member 32 does not prevent the first frame assembly 18 from advancing. In addition, the reaction force accompanied by the advance of the first frame assembly 18 is transmitted from the jack 22 for propulsion to the ground 14 through the cylindrical members 46, the sliders 50 and the second side plates 36. Furthermore, with the advance of the first frame assembly 18, the first frame assembly 18 becomes apart from the second frame assembly 20. However, the space between both frame assemblies is maintained in the closed condition by the plate-like sliders 40.

Subsequently, each jack 52 is contracted, as shown in Fig. 4(C). By this procedure, the sliders 50 are drawn to the side of the jack 52, and therefore, the second side plates 36 are maintained in parallel. Under this condition, each jack 22 for propulsion is contracted.

When each jack 22 is contracted, the reaction force transmitting member 32 is protruded from the first side plate 24 and pressed against the ground, and therefore, the second frame assembly 20 is drawn to the side of the first frame assembly 18. At this time, the reaction force acting on the first frame assembly 18 is transmitted to the ground 14 through the reaction force transmitting member 32.

After then, the processes for alternately advancing the first and second frame assemblies 18, 20 are repeated at a plural times. In addition, while the first and second frame assemblies 18, 20 are advanced, the ground in front of the laying apparatus 10 is excavated by an excavating machine such as a back hoe to extend the channel 16.

When the laying apparatus 10 is advanced by a predetermined distance, a new pipe 12 is disposed from the upper direction in the space defined by the second side plates 36, the second connecting member 38 and the cylindrical members 46 from the plain observation. Then, the new pipe 12 is connected to a pipe already installed. This operation, in particular, the connecting operation is performed in parallel with the excavation and advance operation for advancing the laying apparatus 10 and excavating the ground.

According to the laying apparatus 10, the second side plates 36 are connected so as to be angularly rotatable around the axis extending in the vertical direction. Therefore, it is possible to advance the apparatus 10 along a curved path by alternately advancing the first and second frame assemblies 18, 20 under the condition that the second side plates 36 are displaced mutually in the front and rear directions. This is performed, for instance, by setting the expansion quantities of the jacks 22 for propulsion at different values at the jack placed at one side in the width direction of the channel 16 and at the jack placed at the other side, respectively.

When a pipe is laid at a position deeper than the heights of the first and second side plates 24, 36, the auxiliary side plates similar to the first and second side plates 24, 36 may be connected to the upper sides of the first and second side plates 24, 36.

Furthermore, it is preferable that the bottom of the channel 16 is preliminarily graded by using ballast, concrete or the like, so that the height position of the pipe is at the same level.

**Claims**

1. A method for laying a pipe, comprising the steps of:

alternately performing first process for causing a first frame assembly disposed in a channel formed in the ground to advance in relation to a second frame assembly disposed within said channel and at the rear of said first frame assembly, while loading a reaction force acting on said second frame assembly on said ground, and second process for causing said second frame assembly to advance toward said first frame assembly, while loading a reaction force acting on said first frame assembly on said ground, said first frame assembly being provided with a pair of first plate-like earth-retaining means placed so as to face mutually in the horizontal direction at an interval, and said second frame assembly being provided with a pair of second plate-like earth-retaining means placed so as to face mutually in the horizontal direction at an interval;

excavating earth and sand in front of said first frame assembly to extend said channel while alternately performing said processes; and

disposing a pipe in an excavating place.

2.    A method according to claim 1, wherein said reaction force is transmitted to said ground by pressing at least a portion of said second frame assembly against a portion defining said channel while said first frame assembly is advanced, and wherein said reaction force is transmitted to said ground by pressing at least a portion of said first frame assembly against a portion defining said channel while said second frame assembly is moved.

3.    An apparatus for laying a pipe, comprising:

a first frame assembly provided with a pair of first plate-like earth-retaining means places so as to face mutually in the horizontal direction at an interval and first connecting means for interconnecting both said earth-retaining means;

a second frame assembly disposed at the rear of said first frame assembly and provided with a pair of second plate-like earth-retaining means placed so as to face mutually in the horizontal direction at an interval and second connecting means for interconnecting both said second earth-retaining means;

drive means for relatively moving said first and second frame assemblies in the front and rear directions;

first position maintaining means for unlockably preventing said first frame assembly from moving in the front and rear directions against said ground by causing the reaction force acting on said first frame assembly to work on said ground; and

second position maintaining means for unlockably preventing said second frame assembly from moving in the front and rear directions against said ground by causing the reaction force acting on said second frame assembly to work on the ground.

4.    An apparatus according to claim 3, wherein both said second earth-retaining means are connected to said second connecting means so as to be pivotable around an axis extending in the vertical direction.

5.    An apparatus according to claim 4, wherein said second position maintaining means is provided with a jack for displacing both said second earth-retaining means in such a direction that either of the front and rear ends of both said second earth-retaining means are apart from each other.

6.    An apparatus according to claim 5, wherein said second frame assembly is further provided with a cylindrical member disposed so as to extend from one side of said second earth-retaining means toward the other and a slider provided every said second earth-retaining means, disposed so as to be capable of going in and out of the end of said cylindrical member and connected to the corresponding second earth-retaining means, and wherein said jack is disposed within said cylindrical member such that said slider is displaced relative to said cylindrical member.

7.    An apparatus according to claim 4, wherein both said first earth-retaining means are connected by said first connecting means so as to be relatively indisplaceable.

8.    An apparatus according to claim 3, wherein said first position maintaining means is provided with a plurality of plate-like reaction force transmitting members provided every said first earth-retaining means and placed within a hole formed in the corresponding first earth-retaining means, each reaction force transmitting member being supported by said first earth-retaining means such as to be pivotable around an axis extending in the vertical direction, and wherein said drive means is provided with a plurality of jacks provided corresponding to said reaction force transmitting members, one of a cylinder and a piston rod of each jack being connected to a portion in front of said axis of said reaction force transmitting member, and the other of said cylinder and said piston rod being connected to said second earth-retaining means.

9.    An apparatus according to claim 3, wherein each of said first earth-retaining means has a recess opening inward and backward, and wherein said second frame assembly has a plate-like slider accepted in said recess slidably in the front and rear directions.

# FIG. 1

EP 0 465 667 A1

# FIG. 2

EP 0 465 667 A1

# F I G.3

# F I G. 4(A)

# F I G. 4(B)

# F I G. 4(C)

# F I G. 4(D)

# INTERNATIONAL SEARCH REPORT

**I. CLASSIFICATION OF SUBJECT MATTER (if several classification symbols apply, indicate all)** [6]

According to International Patent Classification (IPC) or to both National Classification and IPC

Int. Cl$^5$    E02D17/08, E21D9/06

**II. FIELDS SEARCHED**

| Minimum Documentation Searched [7] | |
|---|---|
| Classification System | Classification Symbols |
| IPC | E02D17/08, E21D9/06 |

Documentation Searched other than Minimum Documentation
to the Extent that such Documents are Included in the Fields Searched [8]

Jitsuyo Shinan Koho              1962 - 1990
Kokai Jitsuyo Shinan Koho        1972 - 1990

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 55-36507 (Nippon Koki K.K.), March 14, 1980 (14. 03. 80), Lines 15 to 20, column 3, lines 3 to 7, column 5 (Family: none) | 1-3 |
| Y | JP, A, 55-36507 (Nippon Koki K.K.), March 14, 1980 (14. 03. 80), Lines 15 to 20, column 3, lines 3 to 7, column 5 (Family: none) | 4-9 |
| X | JP, A, 60-80692 (Koichi Uemura), May 8, 1985 (08. 05. 85), Lines 14 to 19, column 2 (Family: none) | 1-3 |
| Y | JP, A, 60-80692 (Koichi Uemura), May 8, 1985 (08. 05. 85), Lines 14 to 19, column 2 (Family: none) | 4-6, 9 |

\* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| March 29, 1991 (29. 03. 91) | April 22, 1991 (22. 04. 91) |
| International Searching Authority | Signature of Authorized Officer |
| Japanese Patent Office | |

Form PCT/ISA/210 (second sheet) (January 1985)

| FURTHER INFORMATION CONTINUED FROM THE SECOND SHEET | | |
|---|---|---|
| A | JP, A, 1-284694 (K.K. Araigumi), November 15, 1989 (15. 11. 89), Figs. 10(a) to 10(e) | 5 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers          , because they relate to subject matter not required to be searched by this Authority, namely:

2.☐ Claim numbers          , because they relate to parts of the international application that do not comply with the prescribed requirements to such an extent that no meaningful international search can be carried out, specifically:

3.☐ Claim numbers          , because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)